# EUROPEAN PATENT SPECIFICATION

(11) **EP 4 109 630 B1**
(45) Date of publication and mention of the grant of the patent: **06.12.2023**
(21) Application number: 21180924.9
(22) Date of filing: 22.06.2021
(51) Int. Cl.: H01M 10/625, H01M 10/647, H01M 10/6556, H01M 10/6568

(54) **COOLING SYSTEM FOR A BATTERY MODULE**
KÜHLSYSTEM FÜR EIN BATTERIEMODUL
SYSTÈME DE REFROIDISSEMENT POUR UN MODULE DE BATTERIE

(43) Date of publication of application: 28.12.2022
(73) Proprietor: Volvo Car Corporation, 40531 Göteborg (SE)
(72) Inventor: FORSSELL, Jonas, 40531 Göteborg (SE)
(74) Representative: Maiwald GmbH

(56) References cited:
- CN-U- 212 161 896
- US-A1- 2017 194 680
- US-A1- 2020 212 525

## Description

### TECHNICAL FIELD

The present invention relates to a cooling system for a battery module and a battery module with such cooling system.

### BACKGROUND ART

Battery modules comprises at least one battery pack, which is a collection of battery cells being clamped together in a block to form the battery pack. The battery pack is cooled on the outside by cooling plates. The cooling plates are provided with external cooling pipes conducting a fluid. The cooling pipes are fixed onto the cooling plates to form a cooling cycle. Thus, the fluid flowing through the cooling pipes cools the cooling plates, which in turn cools the battery cells of the battery pack. In case, a battery module comprises more than one battery pack, each battery pack is provided with a separate cooling cycle, each of which having a separate fluid supply and fluid drain.

### SUMMARY

There may, therefore, be a need to provide an improved cooling system for a battery module and a battery module, particularly a cooling system for a battery module comprising more than one battery back enabling a compact design.

The object of the present invention is solved by the subject-matter of the appended independent claims, wherein further embodiments are incorporated in the dependent claims.

According to a first aspect, there is provided a cooling system for a battery module. The cooling system comprises cooling plates and end plates. Each of the cooling plates has at least one internal cooling channel and the cooling plates are configured to be arranged on, particularly opposing, side surfaces of the battery module extending in a longitudinal direction. The end plates are configured to be arranged on end faces of the battery module extending in a width direction. Each of the end plates comprises connecting tubes configured to be sealably connectable with the internal cooling channel of each cooling plate to form a cooling cycle. A first one of the end plates, hereinafter also referred to as "first end plate", comprises a connecting cavity, which fluidly connects the cooling channels of the opposing cooling plates with each other. A second one of the end plates, hereinafter also referred to as "second end plate", comprises a first cavity and a second cavity, both being fluidly separated from each other, each of the first and second cavities being fluidly connected to one of the cooling channels of the cooling plates. The second end plate further comprises an input port configured as an inlet for a cooling fluid and an output port as an outlet for the cooling fluid, wherein the input port is provided in the first cavity and the output port is provided in the second cavity.

The battery module comprises at least one battery pack being a collection of battery cells, particularly prismatic battery cells, which a clamped together in a block forming the battery pack.

By forming the cooling channels inside the cooling plates in combination with connecting the cooling channels of each cooling plate via the connecting tubes and the cavities of the end plates allows forming a cooling circle surrounding one battery pack of the battery module. A cooling fluid is supplied to the input port and through which the cooling fluid is introduced into the first cavity. Then, the cooling fluid flows from the first cavity into the cooling channels of one of the cooling plates, which are connected with the first cavity via connecting tubes. Through the cooling channels and further connecting tubes connecting the cooling channels with the connecting cavity, the cooling fluid flows into the connecting cavity of the second end plate. The connecting cavity is further connected by connecting tubes to cooling channels of another cooling plate. Therefore, the cooling fluid flows through the connecting cavity into the cooling channels of the other cooling plate into the second cavity of the first end plate. The second cavity provides the output port, through which, the used cooling fluid is drained to an external drain pipe. Thus, the cooling system provides a cooling circle for cooling a battery pack of the battery module, which requires a reduced space, particularly compared to known cooling systems. Therefore, the battery module including the cooling system according to the first aspect is more compact. Thus, the cooling system enables integrating a battery module providing an increased capacity into a constrained space.

The first cavity may also be referred to as supply or input cavity. The second cavity may also be referred to as drain or output cavity.

The longitudinal direction extends in the direction of the side surfaces of the battery module, which corresponds to a direction, in which the battery cells of the battery pack are stacked. In other words, the longitudinal direction corresponds to the stacking direction of the battery cells of a battery pack of the battery module. The width direction extends perpendicular to the longitudinal direction and corresponds to a width direction of the battery cells.

The internal cooling channels may also be referred to as internal cooling pipes, and are integrally formed inside the cooling plates.

According to an embodiment, the connecting tubes may be tubes having a length providing a space for deviation of the total length of the battery module in the longitudinal direction.

When the battery cells are heated, thermal expansion of the battery cells may occur. The provided length of the connecting tubes may allow an increase of the total length in the longitudinal direction of the battery pack due to thermal expansion of the battery cell without occurring of a leakage between the connecting tubes and the cooling channels. Further, a tip of the connecting tubes may be provided with an O-ring to seal the connection between the connecting tubes and the cooling channels.

According to an embodiment, each cooling plate may provide several cooling channels.

The cooling channels may be substantially equally distributed in the cooling plate and/or fluidly separated from each other. Thereby, a cooling efficiency of the cooling plate may be increased. Preferably, the cooling channels may have a circular cross section.

According to an embodiment, the input port may be connectable to a supply pipe for supplying the cooling fluid to the cooling system, and the output port may be connectable to a drain pipe for discharging the cooling fluid from the cooling system.

By this, the "fresh" cooling fluid provided by the supply pipe and the "used" cooling fluid drained by the drain pipe are completely separated from each other. "Fresh" cooling fluid describes cooling fluid having a low temperature to cool the battery pack of the battery module. "Used" cooling fluid describes the cooling fluid having an increased temperature compared to the fresh cooling fluid. The increased temperature is caused due to the cooling fluid heats up to cool the battery pack according to a heat exchange effect.

According to an embodiment, the cooling plates and the end plates may be held in position by a tension strap, such as a thin metal strap, surrounding the cooling plates and at least one end plate.

The tension strap may allow adapting a final position of the cooling plates and end plates individually. Thus, by using a tension strap, tolerances due to manufacturing processes and/or thermal expansion, etc., may be compensable. The term "held in position" means that the cooling plates and the end plates are in contact with the battery pack of the battery module.

According to an embodiment, the tension strap may be arranged or accommodated in a recess being formed on the cooling plates and the at least one end plate.

Accommodating the tension strap in the recess may allow a compact design of the battery module, because the provision of the tension strap may not require additional space. Thus, the size of the battery module may be substantially the same with and without the tension strap.

According to an embodiment, the cooling system may further comprise spacers configured to keep the tension strap in a predefined distance from the cooling plate.

Preferably, the spacers may be arranged in the recess. The spacers may allow an improved fastening or tensioning of the cooling plates and end plates to the battery pack.

According to an embodiment, the predefined distance of each spacer may be dependent on a position of the spacer along the longitudinal direction.

In particular, there may be arranged at least three spacers on each cooling plate along the longitudinal direction, wherein one spacer is positioned substantially in the middle seen in the longitudinal direction, and two spacers are positioned near the respective ends of the cooling plate in the longitudinal direction, particularly having the same distance to the spacer in the middle. The predefined distance provided by the spacer in the middle may be larger than the predefined distances of the spacer near the ends, the predefined distances of which are substantially the same. When tensioning the cooling plates and the end plates with the tension strap, such an arrangement of spacers presses the cooling plates towards a longitudinal side of the battery pack, thereby improving or increasing the contact between the cooling plates and the battery pack of the battery module. The longitudinal side of the battery pack corresponds to the side of the battery pack, which extends in the longitudinal direction.

According to an embodiment, one end plate may have tension means to tension and/or fasten the tension strap.

The tension means may facilitate the tensioning of the tension strap resulting in an easy and quick way of pressing the cooling plates and end plates towards the battery pack of the battery module and thereby, particularly pressing the battery cells forming the battery pack of the battery module against each other. Therefore, separate clamping means to clamp the battery cells may be no longer needed.

According to an embodiment, the cooling plates may further comprise stacking flanges extending in an upward direction and/or downward direction, for being stackable in the upward direction.

The upward and downward direction, respectively, extends in the direction of a height of the battery pack. In other words, the upward direction corresponds to a direction, in which several battery packs of the battery module may be stacked onto each other. Preferably, the stacking flanges are integrally formed with the cooling plates. There may be provided stacking flanges protruding upwards from the cooling plates and/or stacking flanges protruding downwards from the cooling plates. The stacking flanges are configured such that stacking flanges of one battery pack of the battery module protruding upwards match stacking flanges of another battery pack of the battery module protruding downwards. In other words, the stacking flanges are configured to form a connection between two battery packs being stacked in the upwards direction, allowing to restrict at least a relative movement in one direction. According to a particular embodiment, the stacking flanges protruding downwards of one battery pack may be positioned on an outer side surface, when seen in the width direction, of the stacking flanges protruding upwards of another battery pack, in case the battery packs may be stacked in the upwards direction. Thereby, a relative movement between these battery packs in the width direction is restricted.

According to an embodiment, the second end plate may further comprise connecting ports in the upward direction, wherein one connecting port may be provided in the first cavity and another connecting port may be provided in the second cavity.

According to an embodiment, the connecting ports may be sealably connectable to an input port and an output port respectively, of another second end plate.

The connecting ports may allow a fluid communication between the second end plates being stacked in the upward direction. Thus, the cooling fluid being provided by the supply pipe may flow into the first cavity of the second end plate being arranged below and through the connecting port in the first cavity, and the input port of the second end plate above into the first cavity of the second end plate above. Analogously, the cooling fluid entering the second cavity of the second end plate above may flow through the output port in the second cavity of the second end plate above, and through the connecting port provided in the second cavity of the second end plate below, into the second cavity of the second end plate below. From the second cavity of the second end plate below, the cooling fluid may be drained through the output port of the second end plate below into the drain pipe. In that way, the cooling system may be individually extendable. In other words, the cooling system may correspond to a modular system, which has one single supply pipe and one single drain pipe, supplying and draining, respectively, the cooling fluid for all battery packs which may be stacked to form the battery module.

According to an embodiment, the stacking flanges may be configured to keep a predefined distance between battery packs being arranged on top of each other in the upward direction.

The predefined distance may prevent an undesired contact between stacked battery packs. Further, the predefined distance may provide a sufficient gap between stacked battery packs ensuring a sufficient air flow cooling the battery cells and/or preventing an undesired electrical contact between battery cells of different battery packs.

According to a second aspect, there is provided a battery module, particularly for a vehicle. The battery module comprises at least one battery pack being a collection of battery cells, particularly prismatic battery cells, together in a block, and a cooling system according to the first aspect, which is configured to cool the at least one battery pack, and being arranged to surround the at least one battery pack.

Such battery pack can provide an increased efficiency within a constrained space. Due to the very compact cooling system as described above, more space is available for battery packs. Therefore, the battery module may comprise bigger battery packs comprising more battery cells and/or may comprise more battery packs stacked in the upward direction.

According to an embodiment, the battery module may comprise at least two battery packs being stacked onto each other in the upward direction, wherein the connection ports of the second end plate of the battery pack at the bottom of the battery module may be sealably connected with the input port and the output port respectively, of the second end plate of the battery pack at the top of the battery module.

The term "at the bottom" does not exclusively describe the battery pack at the bottom of the battery module but may also have the meaning "below". The term "at the top" does not exclusively describe the battery pack at the top of the battery module but may also have the meaning "above". In other words, in case, the battery module comprises more than two battery packs being stacked in the upward direction, the term "at the bottom" may be used to describe the battery pack out of a pair of battery packs, which is positioned below another battery pack. For example, in case of a battery module comprising three battery packs, the battery pack at the bottom may be the battery pack at the bottom of the battery, or may be the battery pack, which is positioned between two battery packs, depending on which two adjacent battery packs is referred to. The same applies analogously to the term "at the top".

It should be noted that the above embodiments may be combined with each other irrespective of the aspect involved.

These and other aspects of the present invention will become apparent from and elucidated with reference to the embodiments described hereinafter.

### BRIEF DESCRIPTION OF DRAWINGS

Exemplary embodiments of the invention will be described in the following with reference to the following drawings.
- Fig. 1: shows a schematic, perspective view of an exemplary embodiment of a battery module.
- Fig. 2: shows a schematic side view of an exemplary embodiment of a battery module.
- Fig. 3: shows a schematic front view of an exemplary embodiment of a battery module.
- Fig. 4: shows a schematic perspective view of an exemplary embodiment of a battery pack provided with a cooling system.
- Fig. 5A: shows an enlarged partial schematic view of connecting tubes being provided on a first end plate of a cooling system for a battery module.
- Fig. 5B: shows the enlarged partial schematic view of Fig. 5A further showing a cooling plate connected to the first end plate.
- Fig. 6: shows an enlarged schematic partial side view of a connection between a first end plate and a cooling plate of a cooling system for a battery module.
- Fig. 7: shows a schematic front view of an exemplary embodiment of a first end plate of a cooling system for a battery module.
- Fig. 8A: shows a schematic top view of an exemplary embodiment of a battery pack provided with a cooling system.
- Fig. 8B: shows a cross-sectional view of the embodiment of the battery pack shown in Fig. 8A.
- Fig. 9: shows a schematic front view of an exemplary embodiment of a second end plate of a cooling system for a battery module.
- Fig. 10: shows a schematic partial view of a cooling system including tension means.
- Fig. 11: shows a schematic cross-sectional view of a battery module comprising three stacked battery packs and a cooling system.

The figures are merely schematic representations and serve only to illustrate embodiments of the invention. Identical or equivalent elements are in principle provided with the same reference signs.

### DESCRIPTION OF EMBODIMENTS

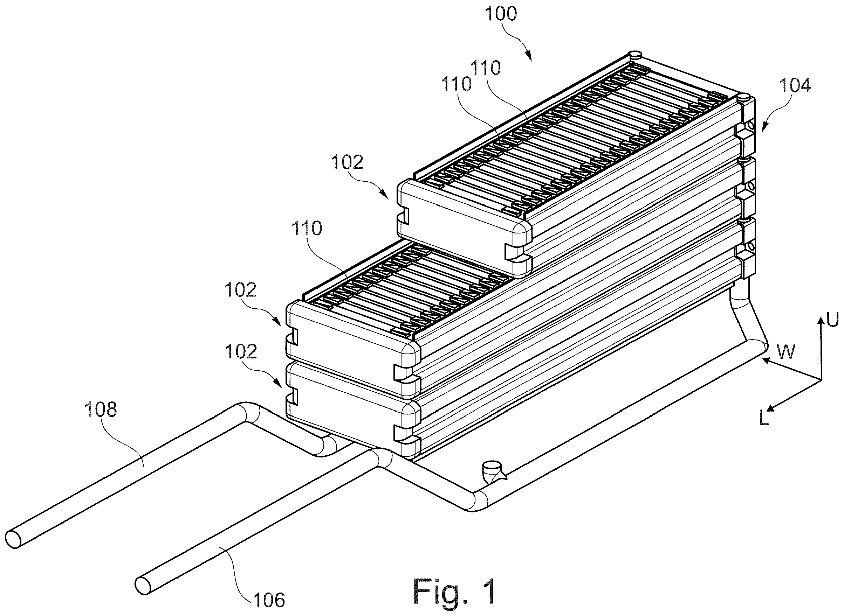

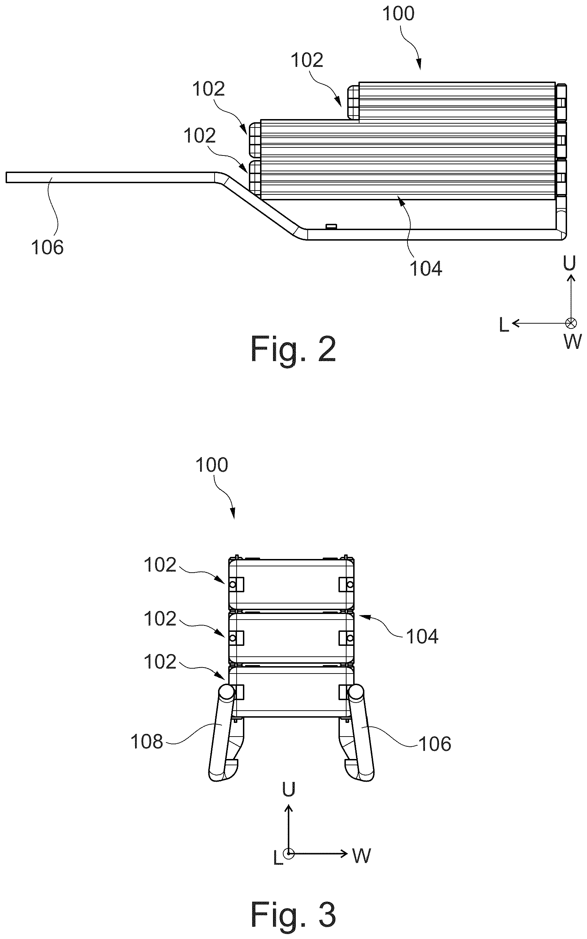

Figures 1 to 3 show different views of an embodiment of a battery module 100. The battery module 100 may be particularly used for vehicles, where space for batteries is limited. Further, the battery module 100 may be used as a power supply for an onboard network of a vehicle.

The battery module 100 comprises three battery packs 102 being surrounded by a cooling system 104. The cooling system 104 is connected to a supply pipe 106 for supplying a cooling fluid (not shown) to the cooling system 104, and a drain pipe 108 for draining the cooling fluid off the cooling system 104.

Each battery pack 102 comprises multiple battery cells 110 being stacked to a block in a longitudinal direction L. The battery cells 110 of each block are electrically connected with each other to form respective the battery pack 102. The battery cells 110 are prismatic battery cells having a front surface extending in a width direction W, a thickness extending in the longitudinal direction L, and a height extending in an upward direction U.

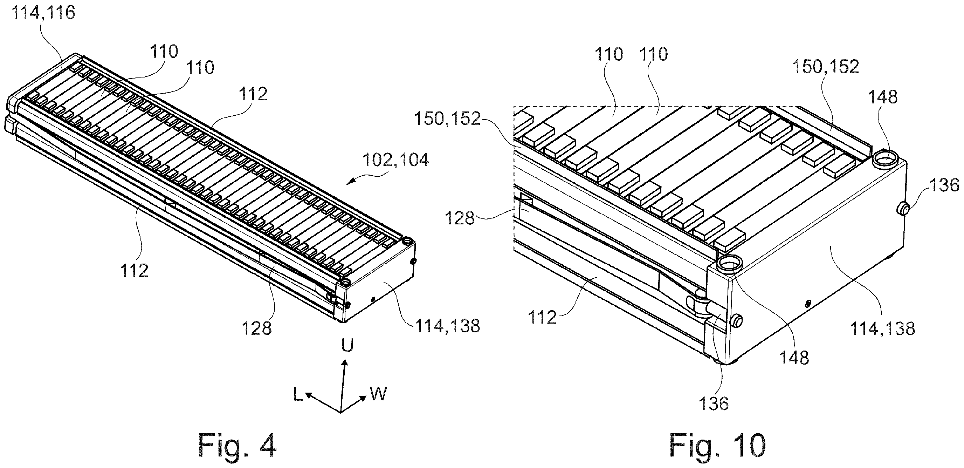

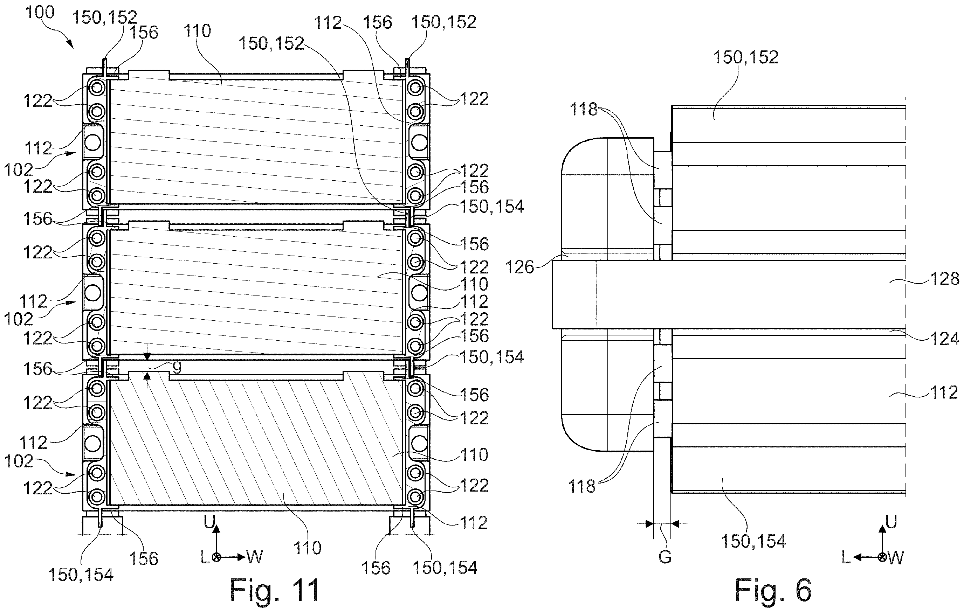

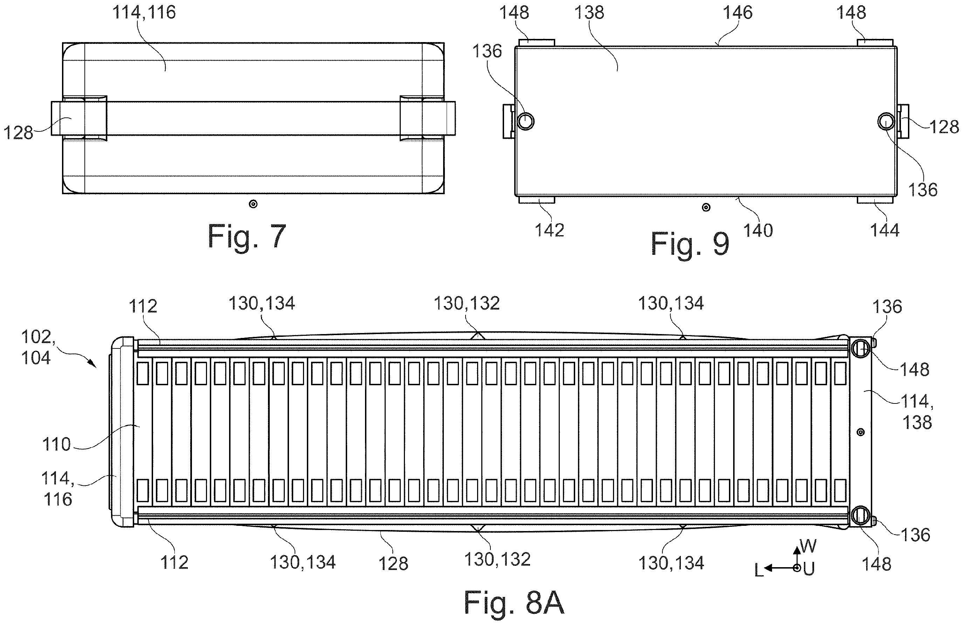

Figure 4 exemplarily shows an embodiment of the battery pack 102 being surrounded by the cooling system 104. The cooling system 104 comprises cooling plates 112 and end plates 114. The cooling plates 112 are arranged at longitudinal side surfaces of the battery pack 102. Thus, the cooling plates 112 are arranged at opposing side extending along the longitudinal direction L, which corresponds to a stacking direction of the battery cells 110. The end plates 114 are arranged at front ends of the battery pack 102 extending along the width direction W. The end plates 114 will be described in detail with regard to Figures 6 and 7.

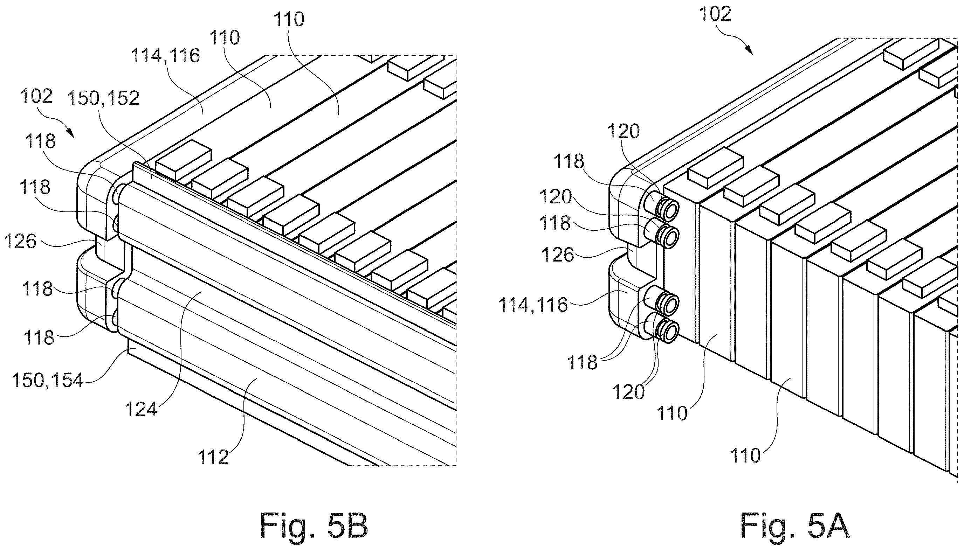

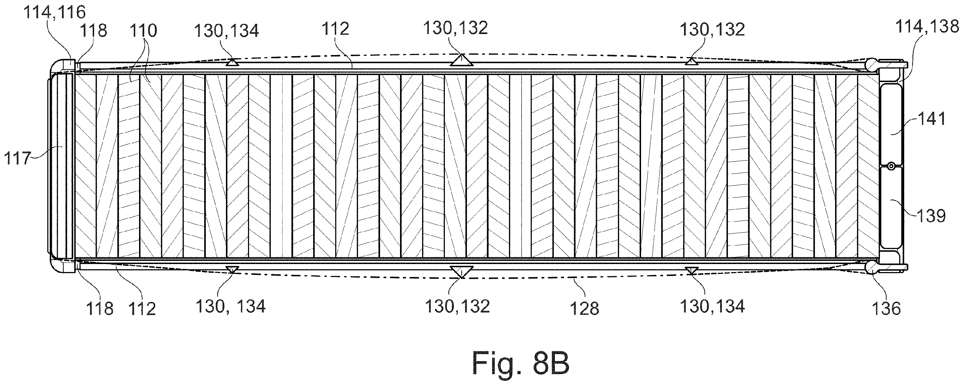

Figure 5 shows a partial view of a front end of the battery pack 102, wherein the cooling plate 112 is not shown. Figure 5 illustrates a first end plate 116, which comprises connecting tubes 118, which are configured to form a sealed connection with the cooling plate 112. The first end plate 116 has connecting tubes 118 on both ends, when seen in the width direction W, wherein the connecting tubes 118 are protruding in the longitudinal direction L. Here, the first end plate 116 comprises four connecting tubes 118 on each end. Thus, the first end plate 116 is configured to be connected to each of the cooling plates 112 by the connecting tubes 118. According to the exemplary embodiment shown in Figure 5, the connecting tubes 118 comprise grooves 120 configured to accommodate an O-ring (not shown) to seal the connection formed with the cooling plates 112. Further, the first end plate 116 comprises a connecting cavity 117 (see Figure 8B). The connecting cavity 117 is formed inside the first end plate 116, and the connecting tubes 118 are in fluid communication with the connecting cavity 117 such that a fluid flowing through the connecting tubes 118 arranged on one end of the first end plate 116 into the connecting cavity 117, flows through the connecting cavity 117 into the connecting tubes 118 arranged on the other end of the first plate 116 and into the cooling plate 112.

The cooling plates 112 comprise at least one cooling channel 122, here four cooling channels 122 (see Figure 11), which are configured to form the sealed connection with the connecting tubes 118. Thus, number, form and size of the cooling channels 122 provided in each cooling plate 112 and number, form and size of the connecting tubes 118 provided on each end of the first end plate 116 matches each other. As it can be seen in Figures 6 and 7, the connecting tubes 118 fit into the cooling channels 122, and a length of the connecting tubes in the longitudinal direction is such that a gap G is provided between a front surface of the first end plate 116 and a front surface of the cooling plate 112 opposing each other. The gap G compensate tolerances, which may occur due to the manufacturing process and/or thermal extension of the battery cells 110 during operation.

Further, Figures 5B and 6 show that the first end plate 116 as well as the cooling plate 112 comprises a recess 124, 126, which is configured to accommodate a tension strap 128. The tension strap 128 is configured to hold the battery cells 110 and the cooling system 104 in position. Further, the tension strap 128 may be used to press the cooling system 104, particularly the cooling plates 112, against the battery cells 110, as it will be further described below.

Figure 8A shows the battery pack 102 in a top view and Figure 8B shows the battery pack in a cross-sectional view of the same perspective. In Figures 8A and 8B, the tension strap 128 is kept in distance from the cooling plates 112 along the longitudinal direction L by spacers 130. In the illustrated embodiment, there are provided three spacers 130 on each longitudinal side of the battery pack 102. The spacers 130 are positioned in the recess 124 of the cooling plates 112. One spacer 132 is positioned in the middle of the longitudinal side, when seen in the longitudinal direction L, and two spacers 134 are positioned further towards the end plates 144 when seen in the longitudinal direction L, and have a substantially equal distance to the spacer 132 in the middle.

The spacer 132 in the middle is configured to keep the tension strap 128 in a distance D from the recess 124 of the cooling plate 112, and the spacers 134 are configured to keep the tension strap 128 in a distance d from the recess 124 of the cooling plate 112, wherein the distance D is larger than the distance d. This causes the tension strap 128 to form a bow-like shape along the longitudinal side of the cooling plates 112. When tensioning or fastening the tension strap 128 around the battery pack 102 and the cooling system 104, a pressure contact of the cooling plates 112 and the longitudinal surface of the battery pack 102 is increased, improving a heat transfer and cooling effect, respectively, between the battery cells 110 and the cooling plates 112.

The tension strap 128 surrounds the cooling plates 112 (see e.g., Figures 8A and 8B) and the first end plate 116 (see e.g., Figure 7), and is tensioned by tension means 136 (see Figure 8B), which are provided on a second end plate 138. The second end plate 138 is arranged at a front end of the battery pack 102 opposing the front end with the first end plate 116.

The second end plate 138 is different from the first end plate 116 and will be described in more detail with regard to Figures 9 and 10. The second end plate 138 comprises on a bottom surface 140 in the upward direction U an input port 142 and an output port 144, and comprises on a top surface 146 in the upward direction U connecting ports 148. Further, the second end plate 138 comprises a first cavity 139 and a second cavity 141, which are separately formed inside the second end plate 138. The input port 142 and the connecting port 148 opposing the input port 142 are fluidly connected to the first cavity 139 inside the second end plate 138. The output port 144 and the connecting port 148 opposing the output port 144 are fluidly connected to the second cavity 141 inside the second end plate 138. Additionally, the second end plate 138 also comprises connecting tubes 118, with which the second end plate 138 is fluidly connected with the cooling plates 112, analogously to the connection between the first end plate 138 and the cooling plates 112. The connecting tubes 118 on one end in the width direction W of the second end plate 138 are fluidly connected with the first cavity 139 and the connecting tubes 118 on the other end of the second plate are fluidly connected with the second cavity 141.

The input port 142 is configured to be connectable to the supply pipe 106 (see e.g., Figure 1) and to a connecting port 148 of another second end plate 138, in case, several battery packs 102 are stacked in the upward direction such that the second end plates 138 are stacked in the upward direction (see also Figure 11). Therefore, the connecting ports 148 are configured to form a sealed connection with the input port 142 and the output port 144, respectively. For example, the connecting ports 148 and/or the input and output ports 142, 144 may be provided with an O-ring to seal the connection against fluid leakage.

The cooling plates 112 will now be described in further detail with regard to Figure 11. As already described above, each cooling plate 112 exemplarily comprises four cooling channels 122 and a recess 124 for accommodating the tension strap 128, which allows a compact design of the cooling system 104. Further, the cooling plates 112 comprises stacking flanges 150, wherein first stacking flanges 152 are arranged on a top side of the cooling plates 112 and protrude upwards seen in the upward direction U and second stacking flanges 154 are arranged on a bottom side of the cooling plates 112 and protrude downwards seen in the upward direction U. Further, the stacking flanges 150 are arranged such that the second stacking flanges 154 of a cooling plate 112 are positioned on an outer side of the first stacking flanges 152 of another cooling plate 112, when the cooling plates 112 are stacked in the upward direction U. Therefore, by stacking battery packs 102 in the upward direction, the stacking flanges 150 prevent a relative movement between the battery packs 102 in the width direction W.

Furthermore, the height of the stacking flanges 150 is adapted to a height of the connecting ports 148, the input port 142 and the output port 144, such that by stacking the cooling plates 112 in the upward direction, the connecting ports 148 of a second end plate 138 form a sealed connection with the input port 142 and the output port 144, respectively, of another second end plate 138, which are stacked.

Additionally, the cooling plates 112 have holders 156 extending toward the battery cells 110, which are configured to hold the battery cells 110 in a predefined position in the upward direction U. Therefore, the stacking flanges 150 further provides a gap g between stacked battery packs 102, preventing an undesired electrical contact between stacked battery packs 102.

Below, the modularity of the cooling system will be described with regard to Figure 11. The cooling system 104 is configured such that it provide a cooling cycle for each battery pack 102 being included in the battery module 100. In Figure 11, the battery module 100 exemplarily comprises three battery packs 102 being stacked in the upward direction U. The cooling system 104 provides a separate cooling cycle for each battery pack 102. The cooling cycle starts in the first cavity 139 of the second end plate 138, to which the cooling fluid is supplied through the input port 142. From the first cavity 139, the cooling fluid flows through the connecting tubes 118 into the cooling channels 122 of a first one of the cooling plates 112. Then, the fluid flows through the cooling channels 122, thereby cooling the battery pack 102 on one longitudinal side, and through the connecting tubes 118 of the first end plate into the connecting cavity 117. From the connecting cavity 117, the cooling fluid flows through the connecting tubes 118 on the other end of the first end plate 116 into the cooling channels 122 of a second one of the cooling plates 112. Then, the fluid flows through the cooling channels 122, thereby cooling the battery pack 102 on the other longitudinal side, and exits the cooling channels 122 of the cooling plate 112 through the connecting tubes 118 into the second cavity 141 of the second end plate 138. The second cavity 141 is fluidly connected with the output port 144, through which the cooling fluid is drained.

In case, as exemplarily shown in Figure 11, several battery packs 102 are stacked in the upward direction U. Only the second end plate 144 of the cooling cycle for the battery pack 102 at the bottom of the battery module 100 is connected to the supply pipe 106 and the drain pipe 108 by the input port 142 and the output port 144, respectively. The second end plates 144 of the cooling cycle for the battery pack 102 being stacked onto the battery pack 102 at the bottom of the battery module 100 is fluidly connected to the second end plate 138 of the cooling cycle at the bottom of the battery module 100 by the input port 142 and the output port 144, respectively, being connected to the connecting ports 148 of the second end plate 138 at the bottom. Thus, the cooling fluid being supplied by the supply pipe 106 into the first cavity 139 of the second end plate 138 at the bottom of the battery module 100 not only flows through the connecting tubes 118 into the cooling plate 112 but also through the connecting port 148 and the input port 142 of the second end plate 138 stacked above into the first cavity 139 of this second end plate 138. At the end of the cooling cycle, the cooling fluid is drained from the second cavity 141 through the output port 144 and the connecting port 148 into the second cavity 141 of the second end plate 138 stacked below, and from this second cavity 141 through the output port 144 into the drain pipe 108.

Thus, the cooling system 104 is modular and may comprise several cooling cycles for several battery packs 102, which are stacked in the upward direction U, simply by connecting the input port 142 and output port 144, respectively of a second end plate 138 being stacked onto another second end plate 138 to the connecting ports 148 of this second end plate 138 being stacked below. Therefore, the cooling system only requires one supply pipe 106 and one drain pipe 108. This results in a very compact design of the cooling system 104.

Other variations to the disclosed embodiments can be understood and effected by those skilled in the art in practicing the claimed invention, from the study of the drawings, the disclosure, and the appended claims. In the claims, the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 100: battery module
- 102: battery pack
- 104: cooling system
- 106: supply pipe
- 108: drain pipe
- 110: battery cell
- 112: cooling plate
- 114: end plate
- 116: first end plate
- 117: connecting cavity
- 118: connecting tube
- 120: groove
- 122: cooling channel
- 124: recess
- 126: recess
- 128: tension strap
- 130: spacer
- 132: spacer
- 134: spacer
- 136: tension means
- 138: second end plate
- 139: first cavity
- 140: bottom surface
- 141: second cavity
- 142: input port
- 144: output port
- 146: top surface
- 148: connecting port
- 150: stacking flange
- 152: first stacking flange
- 154: second stacking flange
- 156: holder

- L: longitudinal direction
- W: width direction
- U: upward direction
- G: gap
- g: gap

## Claims

1. A cooling system (104) for a battery module (100), comprising:
cooling plates (112), each having at least one internal cooling channel (122) and being configured to be arranged on side surfaces of the battery module (100) extending in a longitudinal direction (L);
end plates (114; 116, 138) configured to be arranged on end faces of the battery module (100) extending in a width direction (W), each of the end plates (114) comprising connecting tubes (118) configured to be sealably connectable with the internal cooling channel (122) of each cooling plate (112), to form a cooling cycle;
a first one of the end plates (116) comprising a connecting cavity (117) fluidly connecting the cooling channels (122) of the opposing cooling plates (112) with each other,
a second one of the end plates (138) comprising a first cavity (139) and a second cavity (141), both being fluidly separated from each other, each of the first and the second cavities being fluidly connected to the cooling channels (122) of one of the cooling plates (112),
the second end plate (138) further comprising an input port (142) configured as an inlet for a cooling fluid and an output port (144) configured as an outlet for the cooling fluid; and
the input port (142) being provided in the first cavity (139) and the output port (144) being provided in the second cavity (141).

2. The cooling system (104) according to claim 1, wherein the connecting tubes (118) are tubes having a length providing a space (G) for deviations of the total length of the battery module (100) in the longitudinal direction (L).

3. The cooling system (104) according to claim 1 or 2, wherein each cooling plate (112) provides several cooling channels (122).

4. The cooling system (104) according to any of the preceding claims, wherein the input port (142) is connectable to a supply pipe (106) for supplying the cooling fluid to the cooling system (104), and the output port (144) is connectable to a drain pipe (108) for discharging the cooling fluid from the cooling system (104).

5. The cooling system (104) according to any of the preceding claims, wherein the cooling plates (112) and the end plates (114) are held in position by a tension strap (128) surrounding the cooling plates (112) and at least one end plate (116).

6. The cooling system (104) according to claim 5, wherein the tension strap (128) is arranged in a recess (124, 126) of the cooling plates (112) and the at least one end plate (116).

7. The cooling system (104) according to claim 5 or 6, further comprising spacers (130) configured to keep the tension strap (1128) in a predefined distance (D, d) from the cooling plate (112).

8. The cooling system (104) according to claim 7, wherein the predefined distance (D, d) of each spacer (130) is dependent on a position of the spacer (130) along the longitudinal direction (L).

9. The cooling system (104) according to any of claims 5 to 8, wherein one end plate (138) has tension means (136) configured to tension the tension strap (128).

10. The cooling system (104) according to any of the preceding claims, wherein the cooling plates (112) further comprise stacking flanges (150) extending upwards and/or downwards, for being stackable in the upward direction (U).

11. The cooling system (104) according to any of the preceding claims, wherein the second end plate (138) further comprises connecting ports (148) in the upward direction (U), one connecting port (148) being provided in the first cavity (139) and another connecting port (148) being provided in the second cavity (141).

12. The cooling system (104) according to claim 11, wherein the connecting ports (148) are sealably connectable to an input port (142) and an output port (144) respectively, of another second end plate (138).

13. The cooling system (104) according to any of claims 10 to 12, wherein the stacking flanges (150) are configured to keep a predefined distance (g) between battery packs (102) being arranged on top of each other in the upward direction (U).

14. A battery module (100), comprising:
at least one battery pack (102) being a collection of battery cells (110), particularly prismatic battery cells, clamped together in a block, and
a cooling system (104) according to any of the preceding claims, configured to cool the at least one battery pack (102), and being arranged to surround the at least one battery pack (102).

15. The battery module (100) according to claim 14, comprising at least two battery packs (102) being stacked onto each other in the upward direction (U),
the connection ports of the second end plate (138) at the bottom being sealably connected with the input port (142) and the output port (144), respectively, of the second end plate (138) at the top.

## Patentansprüche

1. Kühlsystem (104) für ein Batteriemodul (100), umfassend:
Kühlplatten (112), von denen jede zumindest einen internen Kühlkanal (122) aufweist und dazu eingerichtet ist, an Seitenoberflächen des Batteriemoduls (100), die sich in einer Längsrichtung (L) erstrecken, angeordnet zu sein;
Endplatten (114; 116, 138), die dazu eingerichtet sind, an Endflächen des Batteriemoduls (100), die sich in einer Breitenrichtung (W) erstrecken, angeordnet zu sein, wobei jede der Endplatten (114) Verbindungsrohre (118) umfasst, die dazu eingerichtet sind, mit dem internen Kühlkanal (122) von jeder Kühlplatte (112) dichtend verbindbar zu sein, um einen Kühlkreislauf auszubilden;
wobei eine erste der Endplatten (116) einen Verbindungshohlraum (117) umfasst, die die Kühlkanäle (122) von gegenüberliegenden Kühlplatten (122) flüssigkeitsbezogen miteinander verbindet,
wobei eine zweite der Endplatten (138) einen ersten Hohlraum (139) und einen zweiten Hohlraum (141) umfasst, die beide flüssigkeitsbezogen getrennt voneinander sind, wobei jeder der ersten und der zweiten Hohlräume flüssigkeitsbezogen mit den Kühlkanälen (122) von einer der Kühlplatten (112) verbunden ist,
wobei die zweite Endplatte (138) ferner einen Eingangsport (142), der als ein Einlass für eine Kühlflüssigkeit eingerichtet ist, und einen Ausgangsport (144), der als ein Auslass für die Kühlflüssigkeit eingerichtet ist, umfasst; und
wobei der Eingangsport (142) in dem ersten Hohlraum (139) vorgesehen ist und der Ausgangsport (144) in dem zweiten Hohlraum (141) vorgesehen ist.

2. Kühlsystem (104) gemäß Anspruch 1, wobei die Verbindungsrohre (118) Rohre sind, die eine Länge aufweisen, die einen Raum (G) für Abweichungen der totalen Länge des Batteriemoduls (100) in der Längsrichtung (L) bereitstellen.

3. Kühlsystem (104) gemäß Anspruch 1 oder 2, wobei jede Kühlplatte (112) mehrere Kühlkanäle (122) bereitstellt.

4. Kühlsystem (104) gemäß einem der vorhergehenden Ansprüche, wobei der Eingangsport (142) mit einer Versorgungsleitung (106) verbindbar ist, um dem Kühlsystem (104) die Kühlflüssigkeit bereitzustellen, und der Ausgangsport (144) mit einer Ablaufleitung (108) verbindbar ist, um die Kühlflüssigkeit aus dem Kühlsystem (104) abzulassen.

5. Kühlsystem (104) gemäß einem der vorhergehenden Ansprüche, wobei die Kühlplatten (112) und die Endplatten (114) durch einen Spannriemen (128), der die Kühlplatten (112) und zumindest eine Endplatte (116) umgibt, in Position gehalten werden.

6. Kühlsystem (104) gemäß Anspruch 5, wobei der Spannriemen (128) in einer Vertiefung (124, 126) der Kühlplatten (112) und der zumindest einen Endplatte (116) angeordnet ist.

7. Kühlsystem (104) gemäß Anspruch 5 oder 6, ferner umfassend Abstandshalter (130), die dazu eingerichtet sind, den Spannriemen (128) in einer vorbestimmten Distanz (D, d) von der Kühlplatte (112) zu halten.

8. Kühlsystem (104) gemäß Anspruch 7, wobei die vorbestimmte Distanz (D, d) von jedem Abstandshalter (130) von einer Position des Abstandshalters (130) entlang der Längsrichtung (L) abhängig ist.

9. Kühlsystem (104) gemäß einem der Ansprüche 5 bis 8, wobei eine Endplatte (138) Spannmittel (136) aufweist, die dazu eingerichtet sind, den Spannriemen (128) zu spannen.

10. Kühlsystem (104) gemäß einem der vorhergehenden Ansprüche, wobei die Kühlplatten (112) ferner Stapelflansche (150) umfassen, die sich nach oben und/oder nach unten erstrecken, um in der Aufwärtsrichtung (U) stapelbar zu sein.

11. Kühlsystem (104) gemäß einem der vorhergehenden Ansprüche, wobei die zweite Endplatte (138) ferner in der Aufwärtsrichtung (U) Verbindungsports (148) umfasst, wobei ein Verbindungsport (148) in dem ersten Hohlraum (139) vorgesehen ist und ein anderer Verbindungsport (148) in dem zweiten Hohlraum (141) vorgesehen ist.

12. Kühlsystem (104) gemäß Anspruch 11, wobei die Verbindungsports (148) dichtend mit einem Eingangsport (142) bzw. einem Ausgangsport (144) der anderen zweiten Endplatte (138) verbindbar sind.

13. Kühlsystem (104) gemäß einem der Ansprüche 10 bis 12, wobei die Stapelflansche (150) dazu eingerichtet sind, eine vorbestimmte Distant (g) zwischen Batteriepacks (102) zu halten, die in der Aufwärtsrichtung (U) aufeinander angeordnet sind.

14. Batteriemodul (100), umfassend:
zumindest einen Batteriepack (102), der eine Sammlung von Batteriezellen (110), insbesondere prismatische Batteriezellen, ist, die zu einem Block zusammengeklemmt sind, und
ein Kühlsystem (104) gemäß einem der vorhergehenden Ansprüche, das dazu eingerichtet ist, den zumindest einen Batteriepack (102) zu kühlen, und angeordnet ist, um den zumindest einen Batteriepack (102) zu umgeben.

15. Batteriemodul (100) gemäß Anspruch 14, umfassend zumindest zwei Batteriepacks (102), die in der Aufwärtsrichtung (U) aufeinandergestapelt sind,
wobei die Verbindungsports der zweiten Endplatte (138) an der Unterseite mit dem Eingangsport (142) bzw. dem Ausgangsport (144) der zweiten Endplatte (138) an der Oberseite dichtend verbunden sind.

## Revendications

1. Système de refroidissement (104) pour un module de batterie (100), comprenant :
des plaques de refroidissement (112), chacune ayant au moins un canal de refroidissement interne (122) et étant configurée pour être agencée sur des surfaces latérales du module de batterie (100) s'étendant dans une direction longitudinale (L) ;
des plaques d'extrémité (114 ; 116, 138) configurées pour être agencées sur des faces d'extrémité du module de batterie (100) s'étendant dans une direction de largeur (W), chacune des plaques d'extrémité (114) comprenant des tubes de raccordement (118) configurés pour pouvoir être raccordés de manière étanche au canal de refroidissement interne (122) de chaque plaque de refroidissement (112), pour former un cycle de refroidissement ;
une première des plaques d'extrémité (116) comprenant une cavité de liaison (117) reliant fluidiquement les canaux de refroidissement (122) des plaques de refroidissement opposées (112) l'un à l'autre,
une seconde des plaques d'extrémité (138) comprenant une première cavité (139) et une seconde cavité (141), toutes deux étant fluidiquement séparées l'une de l'autre, chacune des première et seconde cavités étant fluidiquement reliée aux canaux de refroidissement (122) de l'une des plaques de refroidissement (112),
la seconde plaque d'extrémité (138) comprenant en outre un orifice d'entrée (142) configuré comme une entrée pour un fluide de refroidissement et un orifice de sortie (144) configuré comme une sortie pour le fluide de refroidissement ; et
l'orifice d'entrée (142) étant prévu dans la première cavité (139) et l'orifice de sortie (144) étant prévu dans la seconde cavité (141).

2. Système de refroidissement (104) selon la revendication 1, dans lequel les tubes de raccordement (118) sont des tubes ayant une longueur fournissant un espace (G) pour des déviations de la longueur totale du module de batterie (100) dans la direction longitudinale (L).

3. Système de refroidissement (104) selon la revendication 1 ou 2, dans lequel chaque plaque de refroidissement (112) fournit plusieurs canaux de refroidissement (122).

4. Système de refroidissement (104) selon l'une quelconque des revendications précédentes, dans lequel l'orifice d'entrée (142) peut être raccordé à un tuyau d'alimentation (106) pour fournir le fluide de refroidissement au système de refroidissement (104), et l'orifice de sortie (144) peut être raccordé à un tuyau de vidange (108) pour évacuer le fluide de refroidissement du système de refroidissement (104) .

5. Système de refroidissement (104) selon l'une quelconque des revendications précédentes, dans lequel les plaques de refroidissement (112) et les plaques d'extrémité (114) sont maintenues en position par une courroie de tension (128) entourant les plaques de refroidissement (112) et au moins une plaque d'extrémité (116).

6. Système de refroidissement (104) selon la revendication 5, dans lequel la courroie de tension (128) est agencée dans un évidement (124, 126) des plaques de refroidissement (112) et de la au moins une plaque d'extrémité (116).

7. Système de refroidissement (104) selon la revendication 5 ou 6, comprenant en outre des éléments d'espacement (130) configurés pour maintenir la courroie de tension (1128) à une distance prédéfinie (D, d) de la plaque de refroidissement (112).

8. Système de refroidissement (104) selon la revendication 7, dans lequel la distance prédéfinie (D, d) de chaque élément d'espacement (130) est dépendante d'une position de l'élément d'espacement (130) le long de la direction longitudinale (L).

9. Système de refroidissement (104) selon l'une quelconque des revendications 5 à 8, dans lequel une plaque d'extrémité (138) a des moyens de tension (136) configurés pour tendre la courroie de tension (128).

10. Système de refroidissement (104) selon l'une quelconque des revendications précédentes, dans lequel les plaques de refroidissement (112) comprennent en outre des rebords d'empilement (150) s'étendant vers le haut et/ou vers le bas, pour pouvoir être empilés dans la direction vers le haut (U).

11. Système de refroidissement (104) selon l'une quelconque des revendications précédentes, dans lequel la seconde plaque d'extrémité (138) compren en outre des orifices de raccordement (148) dans la direction vers le haut (U), un orifice de raccordement (148) étant prévu dans la première cavité (139) et un autre orifice de raccordement (148) étant prévu dans la seconde cavité (141).

12. Système de refroidissement (104) selon la revendication 11, dans lequel les orifices de raccordement (148) peuvent être raccordés de manière étanche à un orifice d'entrée (142) et à un orifice de sortie (144), respectivement, d'une autre seconde plaque d'extrémité (138).

13. Système de refroidissement (104) selon l'une quelconque des revendications 10 à 12, dans lequel les rebords d'empilement (150) sont configurés pour maintenir une distance prédéfinie (g) entre des blocs-batterie (102) étant agencés les uns au-dessus des autres dans la direction vers le haut (U).

14. Module de batterie (100), comprenant : au moins un bloc-batterie (102) étant un ensemble de cellules de batterie (110), en particulier des cellules de batterie prismatiques, serrées ensemble dans un bloc, et un système de refroidissement (104) selon l'une quelconque des revendications précédentes, configuré pour refroidir le au moins un bloc-batterie (102), et étant agencé de manière à entourer le au moins un bloc-batterie (102).

15. Module de batterie (100) selon la revendication 14, comprenant au moins deux blocs-batterie (102) étant empilés l'un sur l'autre dans la direction vers le haut (U),
les orifices de raccordement de la seconde plaque d'extrémité (138) en bas étant raccordés de manière étanche à l'orifice d'entrée (142) et à l'orifice de sortie (144), respectivement, de la seconde extrémité (138) en haut.
